# FASCICULE DE BREVET EUROPEEN

(11) **EP 4 305 324 B1**
(45) Date de publication et mention de la délivrance du brevet: **23.10.2024**
(21) Numéro de dépôt: 22707719.5
(22) Date de dépôt: 24.02.2022
(51) Int. Cl.: F16D 66/02, F16D 55/36, G01B 5/02

(54) **DISPOSITIF ET PROCÉDÉ DE CONTRÔLE D'UN SYSTÈME DE FREINAGE À DISQUES D'UN TRAIN D'ATTERRISSAGE D'AÉRONEF**
VORRICHTUNG UND VERFAHREN ZUR ÜBERWACHUNG EINES SCHEIBENBREMSSYSTEMS EINES FLUGZEUGFAHRWERKS
DEVICE AND METHOD FOR MONITORING A DISC BRAKE SYSTEM OF AN AIRCRAFT LANDING GEAR

(30) Priorité: 09.03.2021 FR 2102257
(43) Date de publication de la demande: 17.01.2024
(73) Titulaire: Safran Landing Systems, 78140 Vélizy-Villacoublay (FR)
(72) Inventeur: BOUR, Nadia, 77550 Moissy-Cramayel (FR); BIAVA, Alexandre, 77550 Moissy-Cramayel (FR); DA COSTA, Didier, 77550 Moissy-Cramayel (FR)
(74) Mandataire: Argyma
(86) Numéro de dépôt international: PCT/EP2022/054588
(87) Numéro de publication internationale: WO 2022/189152

(56) Documents cités:
- EP-A1- 3 480 485
- WO-A1-2019/210971
- AU-A- 6 900 574
- GB-A- 2 106 250
- US-A- 2 262 664
- US-A- 4 441 258
- US-B2- 8 807 290

## Description

### Domaine technique

La présente invention concerne le domaine du contrôle d'un train d'atterrissage d'aéronef, en particulier, d'un système de freinage à disques d'un train d'atterrissage.

De manière connue, un train d'atterrissage d'avion comporte une jambe principale sur laquelle au moins une roue est montée mobile en rotation de manière à faire rouler l'avion au sol lors de son atterrissage. Afin de permettre à l'aéronef de ralentir suite à son atterrissage, le train d'atterrissage comporte un système de freinage à disques qui comporte au moins un disque statorique, qui est fixe par rapport à la jambe principale, au moins un disque rotorique, qui est solidaire en rotation de la roue et au moins un actionneur configuré pour appuyer le disque statorique contre le disque rotorique de manière à convertir l'énergie cinétique de la roue en énergie thermique qui est dispersée dans les disques. Le système de freinage à disques comporte une alternance de disques statoriques et de disques rotoriques et est connu par l'homme du métier sous la désignation de « puits de chaleur ». Les disques sont généralement réalisés dans un matériau composite comportant du carbone. De tels disques sont par exemple connus par la demande de brevet FR3070191A1.

A chaque atterrissage, une énergie thermique très importante est dissipée par le système de freinage à disques. En pratique, une réaction d'oxydation se produit entre les disques en carbone et l'oxygène de l'air. Intervenant en présence d'oxygène, cette réaction d'oxydation est d'autant plus importante que le niveau de température atteint par le disque est élevé. L'oxydation thermique conduit à la transformation en gaz du matériau carboné. Cet endommagement dégrade les caractéristiques mécaniques des disques et peut même conduire à leur rupture. Pour limiter cette dégradation, les disques sont recouverts d'une protection anti-oxydation mais la réaction d'oxydation ne peut pas être totalement évitée.

Le contrôle de l'état d'oxydation d'un système de freinage à disques est complexe étant donné que la roue du train d'atterrissage doit être déposée. En pratique, un contrôle d'oxydation est effectué visuellement à chaque changement de roue du train d'atterrissage. Le manque de visibilité rend ce contrôle visuel peu efficace. En cas de rupture de disques, l'avion est immobilisé ce qui représente un inconvénient pour l'exploitant.

L'objectif de la présente invention est de proposer un dispositif de contrôle du niveau d'oxydation thermique d'un système de freinage à disques d'un train d'atterrissage d'aéronef qui puisse être utilisé lors d'une maintenance programmée ou lors d'une dépose de la roue du train d'atterrissage, par des opérateurs non spécialisés et dans des conditions diverses (pluie, neige, de nuit, etc.). Un deuxième objectif est de proposer un dispositif de contrôle qui soit robuste et de conception simple. Enfin, un troisième objectif est de proposer un dispositif de contrôle qui puisse être utilisé lorsque le système de freinage à disques est encore chaud suite à un atterrissage.

### PRESENTATION DE L'INVENTION

L'invention concerne un dispositif de contrôle d'un système de freinage à disques d'un train d'atterrissage d'aéronef, le système de freinage à disques comportant au moins un disque statorique et au moins un disque rotorique configuré pour être plaqué contre ledit disque statorique, le dispositif de contrôle comprenant :
- un ruban qui s'étend longitudinalement et qui est configuré pour être positionné en contact avec la circonférence du disque statorique, le ruban comportant au moins une information visuelle associée à une plage de circonférence prédéterminée du disque statorique,
- un premier organe de préhension fixé à une première extrémité du ruban et
- un deuxième organe de préhension fixé à une deuxième extrémité du ruban de manière à permettre de tendre le ruban à la circonférence du disque statorique afin de déterminer de manière précise la circonférence du disque statorique.

Grâce au dispositif selon l'invention, la mesure de la circonférence d'un disque statorique peut être réalisée de manière pratique et rapide par un opérateur. De plus, la présence d'une information visuelle permet à l'opérateur de contrôler le périmètre pour déterminer s'il existe une oxydation et son degré. Ainsi, un contrôle de l'endommagement peut être réalisé sans dépose du système de freinage à disques.

De manière préférée, le ruban est réalisé dans un matériau ayant un coefficient de dilatation thermique inférieur à 15*10⁻⁶K⁻¹. Cela permet de réaliser une mesure précise même lorsque le système de freinage à disques est encore chaud.

De préférence, le ruban possède une largeur inférieure à 10mm, ce qui permet de positionner le ruban entre deux disques rotoriques pour épouser la forme du disque statorique. Autrement dit, un tel ruban est adapté spécialement à une utilisation aéronautique.

Selon un aspect préféré, le ruban possède une longueur comprise entre 1300mm et 2500mm afin de convenir à la circonférence moyenne d'un disque statorique d'un système de freinage à disques.

De manière préférée, au moins une formation visuelle se présente sous la forme d'une portion longitudinale du ruban qui comporte une couleur et/ou un relief. Ainsi, l'information visuelle est globale et peut être déterminée sans ambiguïté, ce qui n'est pas le cas d'une graduation classique qui est difficile à lire à distance et dans des conditions difficiles.

De préférence, le ruban possède au moins deux informations visuelles associées respectivement à deux plages de circonférence prédéterminées du disque statorique, de préférence, consécutives. Ainsi, on peut déterminer si une opération de maintenance est nécessaire suite à l'étape de contrôle.

Selon un aspect préféré de l'invention, le ruban possède au moins une fente dans laquelle est introduite une portion du ruban de manière à former une boucle configurée pour être positionnée en contact avec la circonférence du disque statorique. La présence d'une fente permet avantageusement au ruban de s'enrouler sur lui-même pour former une boucle régulière garantissant une mesure de circonférence qui est précise.

De préférence, le ruban possède au moins un repère de lecture configuré pour déterminer l'information visuelle à prendre en compte. Ainsi, la lecture est guidée pour l'opérateur.

De préférence, le ruban est métallique pour posséder une grande robustesse.

L'invention concerne également un ensemble d'un système de freinage à disques d'un train d'atterrissage d'aéronef et d'un dispositif de contrôle tel que présenté précédemment, le système de freinage à disques comportant au moins un disque statorique et au moins un disque rotorique configuré pour être plaqué contre ledit disque statorique, le ruban étant positionné en contact avec la circonférence du disque statorique.

De préférence, le disque statorique est monté entre deux disque rotoriques, de préférence encore, l'épaisseur du disque statorique étant inférieure à 10mm. De préférence, au moins un disque comporte du carbone.

L'invention concerne également un procédé de contrôle d'un système de freinage à disques d'un train d'atterrissage d'aéronef avec un dispositif de contrôle tel que présenté précédemment, le système de freinage à disques comportant au moins un disque statorique et au moins un disque rotorique configuré pour être plaqué contre ledit disque statorique, le procédé de contrôle comprenant :
- Une étape de positionnement du ruban en contact avec la circonférence du disque statorique,
- Une étape de traction par un opérateur sur le premier organe de préhension et sur le deuxième organe de préhension de manière à tendre le ruban à la circonférence du disque statorique, et
- Une étape de lecture d'une information visuelle relative à la circonférence du disque statorique sur le ruban de manière à en déduire la dégradation du disque statorique par oxydation thermique.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'un train d'atterrissage comprenant un système de freinage à disques.
La [Fig.2] est une représentation schématique d'un dispositif de contrôle du système de freinage à disques d'un train d'atterrissage selon une forme de réalisation de l'invention.
La [Fig.3] est une représentation schématique rapprochée du dispositif de contrôle de la [Fig.2].
La [Fig.4] est une représentation schématique à plat de portions longitudinales du ruban du dispositif de contrôle de la [Fig.2].
La [Fig.5] est une représentation schématique d'utilisation du dispositif de contrôle sur un système de freinage à disques.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention va être présentée pour le contrôle de l'oxydation thermique d'un disque d'un système de freinage à disques d'un train d'atterrissage d'avion.

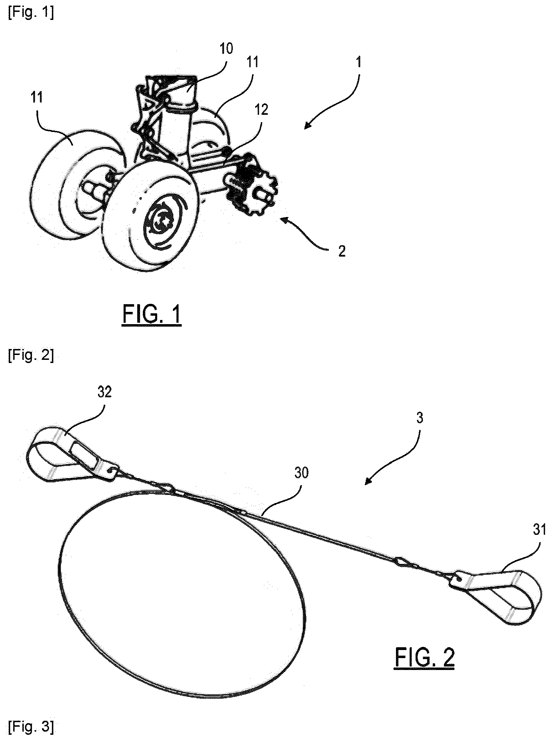

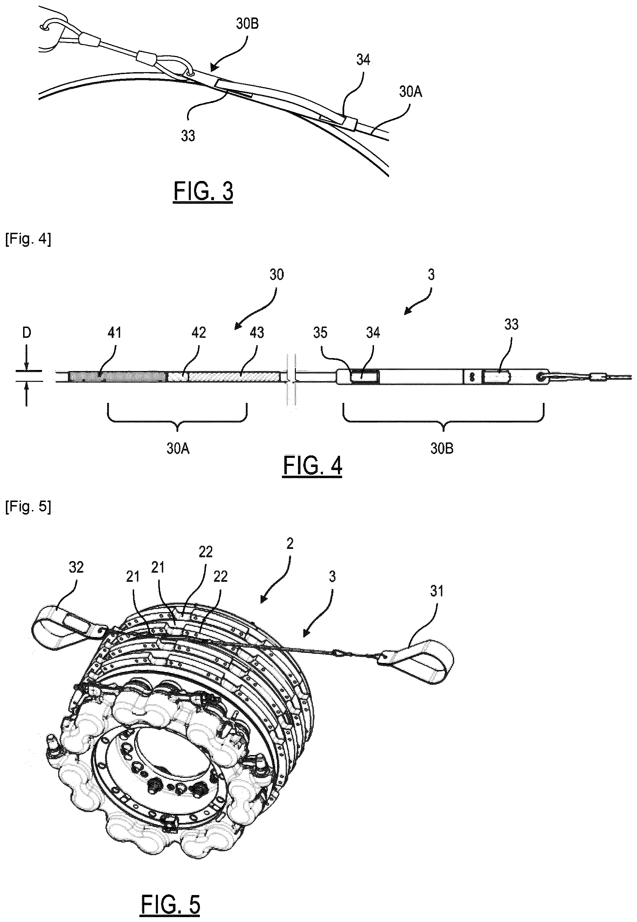

En référence à la [Fig.1], il est représenté un train d'atterrissage 1 qui comporte une jambe principale 10 sur laquelle au moins une roue 11, équipée d'un pneumatique, est montée mobile en rotation de manière à faire rouler l'avion au sol lors de son atterrissage. Afin de permettre à l'aéronef de ralentir suite à son atterrissage, le train d'atterrissage 1 comporte un système de freinage à disques 2 qui comporte au moins un disque statorique, qui est fixe par rapport de la jambe principale 10, au moins un disque rotorique, qui est solidaire en rotation de la roue 11 et au moins un actionneur 12 configuré pour appuyer le disque statorique contre le disque rotorique de manière à convertir par friction l'énergie cinétique de la roue 11 en énergie thermique qui est dispersée dans les disques. Comme illustré à la [Fig.5], le système de freinage à disques 2 comporte une alternance de disques statoriques 21 et de disques rotoriques 22. Un tel système de freinage à disques 2 est connu par l'homme du métier sous la désignation de « puits de chaleur ». Les disques statoriques 21 et les disques rotoriques 22 sont réalisés dans un matériau composite comportant du carbone.

Comme présenté précédemment, une réaction d'oxydation se produit entre les disques en carbone 21, 22 et l'oxygène de l'air. Cette réaction d'oxydation peut dégrader les caractéristiques des disques 21, 22 et conduire à leurs ruptures. Lors d'un contrôle d'un système de freinage à disques 2, il a été remarqué que les disques 21, 22 situés au centre sont les plus chauds et sont les plus susceptibles de s'endommager par oxydation thermique. En pratique, il a été observé une réduction du périmètre intérieur des disques rotoriques centraux 22 et une réduction du périmètre extérieur des disques statoriques centraux 21.

Afin de permettre un contrôle sans dépose du système de freinage à disques 2, l'invention concerne un dispositif de contrôle configuré pour mesurer le périmètre extérieur des disques statoriques 21, en particulier, de ceux disposés au centre du système de freinage à disques 2. Contrairement au diamètre intérieur qui est difficilement accessible sans dépose de la roue, le périmètre extérieur des disques statoriques 21 peut être mesuré de manière fiable tout en conservant le système de freinage à disques 2 assemblé sur l'aéronef. De manière avantageuse, la mesure du périmètre extérieur du disque statorique permet de déterminer le niveau d'oxydation thermique.

Dans l'art antérieur, il est déjà connu des dispositifs pour mesurer la circonférence d'un objet. On connaît un dispositif de mesure se présentant sous la forme d'un simple ruban qui est très rigide et ne peut pas épouser précisément la circonférence d'un objet cylindrique, en particulier, celle d'un disque statorique. En outre, un tel dispositif de mesure impose à l'utilisateur de toucher l'objet qui est mesuré, ce qui n'est pas possible pour un disque statorique qui peut être à une température élevée. De surcroît, un tel dispositif de mesure se dilate et s'endommage lorsqu'il est en contact avec un objet à haute température, ce qui pénalise la précision de la mesure et affecte sa durée de vie.

De plus, la largeur d'un dispositif de mesure disponible dans le commerce est importante et il ne peut pas être positionné à la circonférence d'un disque statorique disposé entre deux disques rotoriques de diamètre plus élevé, en particulier, en cas de dégradation importante. Enfin, un tel dispositif de mesure est généralement gradué en centimètres et millimètres, ce qui rend difficile tout relevé de mesure par un opérateur dans des conditions difficiles (nuit, pluie, neige, etc.).

Selon l'invention, en référence à la [Fig.2], le dispositif de contrôle 3 comprend :
- un ruban 30 qui s'étend longitudinalement et qui est configuré pour être positionné en contact avec la circonférence d'un disque statorique 21, le ruban 30 comportant au moins une information visuelle 41, 42, 43 (non représenté sur [Fig.2]) associée à une plage de circonférence prédéterminée du disque statorique 21,
- Un premier organe de préhension 31 fixé à une première extrémité du ruban 30 et
- un deuxième organe de préhension 32 fixé à une deuxième extrémité du ruban 30 de manière à permettre de tendre le ruban 30 à la circonférence du disque statorique 21 afin de déterminer de manière précise la circonférence du disque statorique 21.

Dans cet exemple, le ruban 30 est métallique de manière à être robuste et résister à la corrosion et à l'abrasion. De manière préférée, le ruban 30 est réalisé en acier inoxydable. Il va de soi que le ruban 30 pourrait être réalisé dans d'autres matériaux, en particulier, dans un matériau composite comportant des fibres, par exemple, des fibres de carbone ou céramique (verre, basalte, etc.) ainsi que des matériaux à matrice organique tenant à des températures de l'ordre de 100°C.

De préférence, le ruban 30 possède un coefficient de dilatation thermique inférieur à 15*10⁻⁶K⁻¹. Une telle propriété est avantageuse étant donné qu'elle permet à un opérateur d'utiliser le dispositif de contrôle 3 lorsque le système de freinage à disques 2 est encore chaud suite à un atterrissage. Autrement dit, un contrôle peut être réalisé directement entre un atterrissage et un décollage, sans immobiliser l'avion.

Dans cet exemple, en référence à la [Fig.4], le ruban 30 possède une largeur D inférieure à 10mm. Une telle largeur est avantageuse étant donné qu'elle permet au ruban 30 de se placer à la circonférence d'un disque statorique 21 positionné entre deux disques rotoriques 22. De manière connue, un disque statorique 21 possède un diamètre plus faible que celui des disques rotoriques 22. Aussi, une telle largeur D permet au ruban de se placer entre deux disques rotoriques espacés d'une largeur de 10mm, en particulier, en cas de dégradation importante par oxydation thermique du disque statorique 21. Une largeur inférieure à 10mm permet au ruban 10 d'épouser la circonférence d'un disque statorique 21 de manière stable.

Le ruban 30 possède une épaisseur permettant au ruban de se courber et d'épouser la circonférence d'un disque statorique 21. De manière préférée, l'épaisseur du ruban 30 est inférieure à 0.6 mm afin d'éviter des effets de crêtes qu'un ruban trop rigide pourraient former lorsque l'on essaye de le courber pour épouser une circonférence. De telles crêtes fausseraient la mesure. Le ruban 30 est suffisamment épais pour conférer une robustesse d'utilisation au ruban.

De préférence, le ruban 30 possède une longueur comprise entre 1300mm et 2500mm de manière à permettre de mesurer la circonférence de tout disque statorique 21 d'un système de freinage à disques 2.

Dans cet exemple, comme illustré à la [Fig.4], le ruban 30 comporte plusieurs informations visuelles 41, 42, 43 relatives à la circonférence du disque statorique 21, afin d'indiquer de manière visuelle à un opérateur si la circonférence mesurée est conforme (faible dégradation due à l'oxydation thermique) ou réduite (dégradation forte/critique due à l'oxydation thermique). De manière préférée, les informations visuelles 41, 42, 43 peuvent représenter plusieurs degrés de dégradation due à l'oxydation thermique.

En référence à la [Fig.4], le ruban 30 comporte trois informations visuelles 41, 42, 43 qui se présentent sous la forme de portions longitudinales consécutives qui correspondent respectivement à une faible dégradation (portion longitudinale de couleur verte), à une forte dégradation (portion longitudinale de couleur jaune) et à une dégradation critique (portion longitudinale de couleur rouge). Chaque information visuelle 41, 42, 43 est associée à une plage de valeurs de circonférence extérieure qui est prédéterminée, de préférence, par retour d'expérience.

Afin de résister aux frottements et à l'usure, au moins une information visuelle 41, 42, 43 comporte un relief réalisé par gravure laser. De préférence, comme illustré à la [Fig.4], toutes les informations visuelles 41, 42, 43 possèdent des reliefs différents afin de pouvoir se différencier visuellement. L'utilisation combinée d'une couleur et d'un relief pour chaque information visuelle 41, 42, 43 permet de faciliter la lecture au cours du temps. En cas d'usure et de disparition de la couleur, chaque information visuelle 41, 42, 43 peut être différenciée grâce à son relief. De manière avantageuse, une restauration de chaque information visuelle 41, 42, 43 pourra être réalisée en se fiant aux différents reliefs visibles.

Selon un aspect préféré de l'invention, chaque dispositif de contrôle 3 est propre à un type de train d'atterrissage 1 d'un avion. Il est de préférence stocké dans une valise afin de le protéger des pliures, des impacts, de la graisse ou de l'huile. La valise peut être transportée par les opérateurs de maintenance. De préférence, chaque dispositif de contrôle 3 est identifié par une plaque d'identification positionnée, en particulier, sur un organe de préhension 31, 32.

Comme illustré aux figures 3 et 4, le ruban 30 comprend au moins une fente 33, 34 dans laquelle est introduite une portion du ruban 30 de manière à former une boucle configurée pour être positionnée en contact avec la circonférence du disque statorique 21. Ainsi, le ruban 30 épouse la surface extérieure du disque statorique 21 pour mesurer avec précision sa circonférence extérieure.

Dans cette forme de réalisation, toujours en référence aux figures 3 et 4, le ruban 30 comporte une première partie 30A, qui comprend les informations visuelles 41, 42, 43, et une deuxième partie 30B qui comprend deux fentes 33, 34 pour permettre de former une boucle comme cela sera présenté par la suite. Lorsque la boucle est formée, en référence à la [Fig.3], seule une portion longitudinale de la première partie 30A du ruban 30 est visible sur la deuxième partie 30B. La première partie 30A du ruban 30 peut coulisser par rapport à la deuxième partie 30B de manière à régler le diamètre de la boucle formée par le ruban. De préférence, la première partie 30A possède une largeur D inférieure à 6,5mm pour permettre son positionnement entre deux disques rotoriques 22.

De manière préférée, la deuxième partie 30B comporte un repère de lecture 35 afin de permettre de définir visuellement l'information visuelle 41, 42, 43 qui doit être prise en compte, c'est-à-dire, celle qui est alignée avec le repère de lecture 35. Dans cet exemple, le repère de lecture 35 correspond à une extrémité de la fente 34 comme représenté à la [Fig.4]. Il va de soi que d'autres types de repère de lecture pourraient convenir.

De manière préférée, les informations visuelles 41,42,43 sont définies afin de remplir une fonction de détrompage. En cas de mauvais positionnement, aucune information visuelle 41, 42, 43 n'est présente au niveau du repère de lecture 35.

Comme illustré à la [Fig.2], les organes de préhension 31, 32 se présentent sous la forme de poignées, de préférence en cuir, afin de permettre à un opérateur de tendre le ruban 30 à la circonférence de manière pratique et à distance, sans risque de toucher le système de freinage à disques 2 encore chaud.

De manière optionnelle, au moins un organe de préhension 31, 32 est relié au ruban 30. Dans cet exemple, la boucle formée par le ruban 30 est indémontable du fait de la présence des organes de préhension 31, 32. Dans cet exemple, chaque organe de préhension 31, 32 est relié au ruban 30 par l'intermédiaire d'un mousqueton mais d'autres moyens de connexion pourraient convenir (crochet, clip, etc.). Le ruban 30 et la tête de lecture 34 forment ainsi une boucle qui sera non démontable grâce aux organes de préhension 31, 2 rendant le dispositif de mesure 3 plus facile à utiliser.

L'invention concerne également un procédé de contrôle du système de freinage à disques 2 du train d'atterrissage 1 d'aéronef avec le dispositif de contrôle 3. Dans cette mise en oeuvre, un opérateur souhaite contrôler le périmètre extérieur d'un disque statorique 21 situé au centre d'un système de freinage à disques 2.

Tout d'abord, le périmètre de la boucle formée par le ruban 30 est réglé de manière à être supérieur à celui du disque statorique 21 et passer les disques rotoriques 2. Du fait de sa faible largeur, le ruban 30 peut être glissé entre deux disques rotoriques 22 sans risque que l'opérateur ne soit en contact avec la chaleur du système de freinage à disques 2. Le procédé comporte une étape de positionnement du ruban 30 en contact avec la circonférence du disque statorique 21, en particulier, entre deux disques rotoriques 22.

Le procédé comporte une étape de traction par un opérateur sur le premier organe de préhension 31 et sur le deuxième organe de préhension 32 de manière à tendre le ruban 30 à la circonférence du disque statorique 21. Au cours de cette étape de traction, le périmètre de la boucle formée par le ruban 30 se réduit. Le ruban 30 coulisse dans les fentes 33, 34 pour adapter le périmètre de la boucle. En fonction du périmètre du disque statorique 21, l'information visuelle 41, 42, 43 positionnée en regard du repère de lecture 35 est différente. Du fait de sa faible épaisseur, le ruban 30 épouse précisément la forme extérieure du disque statorique 21 et la mesure de circonférence est précise.

Le procédé comporte une étape de lecture d'une information visuelle relative 41, 42, 43 à la circonférence du disque statorique 21 sur le ruban 30 de manière à en déduire la dégradation du disque statorique 21 par oxydation thermique.

Dans cet exemple, en présence d'une faible dégradation (première information visuelle 41), aucune étape de maintenance n'est mise en oeuvre. En cas de forte dégradation (deuxième information visuelle 42), une surveillance accrue est prévue. En cas de dégradation critique (troisième information visuelle 43), une opération de maintenance est réalisée.

De manière avantageuse, du fait du faible coefficient de dilatation thermique du ruban 30, la mesure de la circonférence extérieure n'est que faiblement affectée par la température du disque statorique 21. La présence d'une information visuelle 41, 42, 43 se présentant sous la forme d'une couleur associée à une plage de circonférence permet avantageusement un contrôle dans des conditions difficiles (pluie, neige, nuit, etc.) de manière rigoureuse.

De manière avantageuse, les organes de préhension 31, 32 permettent un écartement pour libérer le dispositif de mesure 3 du système de freinage à disques 2 et passer les disques rotoriques 22. L'opérateur peut agrandir le diamètre de la boucle en donnant de petits à-coups sur les poignées de préhension 31, 32 afin de pouvoir dégager le dispositif de mesure 3 de sa position de mesure.

## Revendications

1. Ensemble d'un système de freinage à disques (2) d'un train d'atterrissage (1) d'aéronef et d'un dispositif de contrôle (3), le système de freinage à disques (2) comportant au moins un disque statorique (21) et au moins un disque rotorique (22) configuré pour être plaqué contre ledit disque statorique (21), **caractérisé en ce que** le dispositif de contrôle (3) comprend:
• un ruban (30) qui s'étend longitudinalement, le ruban (30) comportant au moins une information visuelle (41, 42, 43) associée à une plage de circonférence prédéterminée du disque statorique (21), le ruban (30) étant positionné en contact avec la circonférence du disque statorique (21),
• un premier organe de préhension (31) fixé à une première extrémité du ruban (30) et
• un deuxième organe de préhension (32) fixé à une deuxième extrémité du ruban (30) de manière à permettre de tendre le ruban (30) à la circonférence du disque statorique (21) afin de déterminer de manière précise la circonférence du disque statorique (21).

2. Ensemble selon la revendication 1, dans lequel le ruban (30) est réalisé dans un matériau ayant un coefficient de dilatation thermique inférieur à 15*10⁻⁶K⁻¹.

3. Ensemble selon l'une des revendications 1 à 2, dans lequel le ruban (30) possède une largeur (D) inférieure à 10mm.

4. Ensemble selon l'une des revendications 1 à 3, dans lequel au moins une formation visuelle (41, 42, 43) se présente sous la forme d'une portion longitudinale du ruban (30) qui comporte une couleur et/ou un relief.

5. Ensemble selon l'une des revendications 1 à 4, dans lequel le ruban (30) possède au moins deux informations visuelles (41, 42, 43) associées respectivement à deux plages de circonférence prédéterminées du disque statorique (21), de préférence, consécutives.

6. Ensemble selon l'une des revendications 1 à 5, dans lequel le ruban (30) possède au moins une fente (33, 34) dans laquelle est introduite une portion du ruban (30) de manière à former une boucle configurée pour être positionnée en contact avec la circonférence du disque statorique (21).

7. Ensemble selon l'une des revendications 1 à 6, dans lequel le ruban (30) possède au moins un repère de lecture (35) configuré pour déterminer l'information visuelle (41, 42, 43) à prendre en compte.

8. Ensemble selon l'une des revendications 1 à 7, dans lequel le ruban (30) est métallique.

9. Ensemble selon l'une des revendications 1 à 8, dans lequel le disque statorique (21) est monté entre deux disque rotoriques (22), l'épaisseur du disque statorique (21) étant inférieure à 10mm.

10. Procédé de contrôle d'un système de freinage à disques (2) d'un train d'atterrissage (1) d'aéronef avec un dispositif de contrôle (3) selon un ensemble selon l'une des revendications 1 à 9, le système de freinage à disques (2) comportant au moins un disque statorique (21) et au moins un disque rotorique (22) configuré pour être plaqué contre ledit disque statorique (21), le procédé de contrôle (3) comprenant :
• Une étape de positionnement du ruban (30) en contact avec la circonférence du disque statorique (21),
• Une étape de traction par un opérateur sur le premier organe de préhension (31) et sur le deuxième organe de préhension (32) de manière à tendre le ruban (30) à la circonférence du disque statorique (21), et
• Une étape de lecture d'une information visuelle (41, 42, 43) relative à la circonférence du disque statorique (21) sur le ruban (30) de manière à en déduire la dégradation du disque statorique (21) par oxydation thermique.

## Patentansprüche

1. Baugruppe aus einem Scheibenbremssystem (2) eines Flugkörpersfahrwerks (1) und einer Steuervorrichtung (3), wobei das Scheibenbremssystem (2) mindestens eine Statorscheibe (21) und mindestens eine Rotorscheibe (22) umfasst, die so konfiguriert ist, dass sie gegen die Statorscheibe (21) gepresst wird, **dadurch gekennzeichnet, dass** die Steuervorrichtung (3) umfasst:
• ein Band (30), das sich in Längsrichtung erstreckt, wobei das Band (30) mindestens eine visuelle Information (41, 42, 43) aufweist, die mit einem vorbestimmten Umfangsbereich der Statorscheibe (21), verbunden ist, wobei das Band (30) in Kontakt mit dem Umfang der Statorscheibe (21) positioniert ist,
• ein erstes Greifelement (31), das an einem ersten Ende des Bandes (30) befestigt ist, und
• ein zweites Greifelement (32), das an einem zweiten Ende des Bandes (30) befestigt ist, so dass das Band (30) an dem Umfang der Statorscheibe (21) gespannt werden kann, um den Umfang der Statorscheibe (21) genau zu bestimmen.

2. Baugruppe nach Anspruch 1, wobei das Band (30) aus einem Material mit einem thermischen Ausdehnungskoeffizienten von weniger als 15*10⁻⁶K⁻¹ hergestellt ist.

3. Baugruppe nach einem der Ansprüche 1 bis 2, wobei das Band (30) eine Breite (D) von weniger als 10 mm aufweist.

4. Baugruppe nach einem der Ansprüche 1 bis 3, wobei mindestens eine visuelle Bildung (41, 42, 43) in Form eines Längsabschnitts des Bandes (30) vorliegt, der eine Farbe und/oder ein Relief aufweist.

5. Baugruppe nach einem der Ansprüche 1 bis 4, wobei das Band (30) mindestens zwei visuelle Informationen (41, 42, 43) besitzt, die jeweils zwei vorbestimmten Umfangsbereichen der Statorscheibe (21) zugeordnet sind vorzugsweise aufeinanderfolgenden.

6. Baugruppe nach einem der Ansprüche 1 bis 5, wobei das Band (30) mindestens einen Schlitz (33, 34) aufweist, in den ein Abschnitt des Bandes (30) eingeführt wird, um eine Schleife zu bilden, die so konfiguriert ist, dass sie in Kontakt mit dem Umfang der Statorscheibe (21) positioniert werden kann.

7. Baugruppe nach einem der Ansprüche 1 bis 6, wobei das Band (30) mindestens eine Lesekennzeichnung (35) aufweist, die so konfiguriert ist, dass sie die zu berücksichtigende visuelle Information (41, 42, 43) bestimmt.

8. Baugruppe nach einem der Ansprüche 1 bis 7, wobei das Band (30) aus Metall besteht.

9. Baugruppe nach einem der Ansprüche 1 bis 8, wobei die Statorscheibe (21) zwischen zwei Rotorscheiben (22) montiert ist, wobei die Dicke der Statorscheibe (21) weniger als 10 mm beträgt.

10. Verfahren zum Steuern eines Scheibenbremssystems (2) eines Flugkörpersfahrwerks (1) mit einer Steuervorrichtung (3) gemäß einer Baugruppe nach einem der Ansprüche 1 bis 9, wobei das Scheibenbremssystem (2) mindestens eine Statorscheibe (21) und mindestens eine Rotorscheibe (22) aufweist, die so konfiguriert ist, dass sie gegen die Statorscheibe (21) gepresst wird, wobei das Steuerverfahren (3) Folgendes umfasst:
• Einen Schritt zum Positionieren des Bandes (30) in Kontakt mit dem Umfang der Statorscheibe (21),
• Einen Schritt, bei dem ein Bediener am ersten Greifelement (31) und am zweiten Greifelement (32) zieht, um das Band (30) am Umfang der Statorscheibe (21) zu spannen, und
• Einen Schritt des Lesens einer visuellen Information (41, 42, 43) bezüglich des Umfangs der Statorscheibe (21) auf dem Band (30), so dass daraus die Beschädigung der Statorscheibe (21) durch thermische Oxidation ermittelt wird

## Claims

1. Assembly of a disk brake system (2) of an aircraft landing gear (1) and a monitoring device (3), the disk brake system (2) comprising at least one stator disk (21) and at least one rotor disk (22) configured to be pressed against said stator disk (21), **characterized in that** the monitoring device (3) comprises :
- a tape (30) extending longitudinally, the tape (30) comprising at least one visual information item (41, 42, 43) associated with a predetermined circumferential range of the stator disk (21), the tape (30) being positioned in contact with the circumference of the stator disk (21),
- a first gripping member (31) attached to a first end of the tape (30) and
- a second gripping member (32) attached to a second end of the tape (30) to tension the tape (30) around the circumference of the stator disk (21) to precisely determine the circumference of the stator disk (21).

2. Assembly according to claim 1, wherein the tape (30) is made of a material having a coefficient of thermal expansion less than 15*10⁻⁶K⁻¹.

3. Assembly according to one of claims 1 to 2, wherein the tape (30) has a width (D) of less than 10 mm.

4. Assembly according to one of claims 1 to 3, wherein at least one visual formation item (41, 42, 43) is in the form of a longitudinal portion of the tape (30) that comprises a color and/or a relief.

5. Assembly according to one of claims 1 to 4, wherein the tape (30) has at least two visual information items (41, 42, 43) associated respectively with two predetermined circumferential ranges of the stator disk (21), preferably consecutive.

6. Assembly according to one of claims 1 to 5, wherein the tape (30) has at least one slot (33, 34) wherein a portion of the tape (30) is inserted so as to form a loop configured to be positioned in contact with the circumference of the stator disk (21).

7. Assembly according to one of claims 1 to 6, wherein the tape (30) has at least one reading mark (35) configured to determine the visual information (41, 42, 43) to be taken into account.

8. Assembly according to any one of claims 1 to 7, wherein the tape (30) is metallic.

9. Assembly according to one of claims 1 to 8, wherein the stator disk (21) is mounted between two rotor disks (22), the thickness of the stator disk (21) being less than 10 mm.

10. Method for checking a disk brake system (2) of an aircraft landing gear (1) with a monitoring device (3) according to an assembly according to one of claims 1 to 9, the disk brake system (2) comprising at least one stator disk (21) and at least one rotor disk (22) configured to be pressed against said stator disk (21), the monitoring method (3) comprising:
- A step of positioning the tape (30) in contact with the circumference of the stator disk (21),
- A step of traction by an operator on the first gripping member (31) and on the second gripping member (32) so as to tension the tape (30) around the circumference of the stator disk (21), and
- A step of reading a visual information item (41, 42, 43) relative to the circumference of the stator disk (21) on the tape (30) in order to deduce therefrom the degradation of the stator disk (21) by thermal oxidation.
